(19) Europäisches Patentamt
European Patent Office
Office européen des brevets

(11) **EP 4 571 510 A1**

(12) **EUROPEAN PATENT APPLICATION**
published in accordance with Art. 153(4) EPC

(43) Date of publication:
**18.06.2025 Bulletin 2025/25**

(21) Application number: 23854271.6

(22) Date of filing: 07.08.2023

(51) International Patent Classification (IPC):
*G06F 9/50* (2006.01)

(86) International application number:
**PCT/CN2023/111452**

(87) International publication number:
**WO 2024/037368 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.08.2022 CN 202210998975**

(71) Applicant: **ZTE CORPORATION**
**Shenzhen, Guangdong 518057 (CN)**

(72) Inventors:
• **TU, Yaofeng**
  **Shenzhen, Guangdong 518057 (CN)**
• **CHENG, Yi**
  **Shenzhen, Guangdong 518057 (CN)**
• **NIU, Jiahao**
  **Shenzhen, Guangdong 518057 (CN)**
• **GAO, Hong**
  **Shenzhen, Guangdong 518057 (CN)**
• **WANG, Dezheng**
  **Shenzhen, Guangdong 518057 (CN)**
• **HAN, Yinjun**
  **Shenzhen, Guangdong 518057 (CN)**
• **ZHANG, Dengyin**
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SCHEDULING OPTIMIZATION METHOD OF SCHEDULING APPARATUS, SCHEDULING APPARATUS AND STORAGE MEDIUM**

(57) Disclosed in the present application are a scheduling optimization method, a scheduling apparatus and a storage medium. The method comprises: acquiring information of the current production environment of a scheduling apparatus; acquiring a first scheduling action, a first scheduling policy and a first parameter value thereof which are used by the current scheduling of the scheduling apparatus; according to the information of the production environment, the first scheduling action, the first scheduling policy as well as the first parameter value thereof, and a scheduling performance optimization model, determining a second scheduling action, a second scheduling policy and a second parameter value thereof which are used by the optimized scheduling apparatus; and blocking in a scheduling queue a workload to be scheduled, replacing the first scheduling action, the first scheduling policy and the first parameter value in the first scheduling policy which are used by the current scheduling of the scheduling apparatus with the second scheduling action, the second scheduling policy and the second parameter value in the second scheduling policy, and relieving the blocking of the scheduling queue so as to perform scheduling optimization.

Fig. 1

## Description

## CROSS REFERENCE TO RELATED APPLICATION

This application claims priority to Chinese Patent Application No. 202210998975.2 filed on August 19, 2022, entitled "Scheduling optimization method of scheduling apparatus, scheduling apparatus and storage medium", the entirety of which is incorporated herein by reference.

## TECHNICAL FIELD

The present application relates to the field of cloud computing technology, and in particular to a scheduling optimization method of scheduling apparatus, scheduling apparatus and storage medium.

## BACKGROUND

In recent years, with the rapid development of cloud-native infrastructure and technology, cloud-native has become a unified infrastructure for deploying big data application tasks within enterprises due to its agility, reliability, high elasticity and easy scalability.

With scale up of the cluster, how to formulate reasonable scheduling policies for cloud-native infrastructure, make full use of cluster resources, and improve the scheduling performance has become the hotspot and difficulty of research in the field of cloud computing. Among current technical solutions, some technical solutions optimize scheduling performance in complex production environments based on manual experience; and some adaptive scheduling optimization methods in other fields cannot be directly applied to scheduling performance optimization under cloud-native architecture due to difference in application scenarios.

However, in both manual scheduling and scheduling optimization methods in other fields, the impact of change in actual production environment on scheduling performance optimization is not taken into consideration during scheduling.

## SUMMARY

The embodiments of the present application provide a scheduling optimization method of scheduling apparatus, scheduling apparatus and storage medium, which can perform adaptive scheduling optimization according to changes in the production environment.

In a first aspect, the present application provides a scheduling optimization method of a scheduling apparatus, the method includes: acquiring information of a current production environment of the scheduling apparatus, the information of the current production environment includes configuration information of a cluster and information of a workload to be scheduled; acquiring a first scheduling action and a first scheduling policy which are used by current scheduling of the scheduling apparatus and a first parameter value in the first scheduling policy; determining a second scheduling action, a second scheduling policy which are used by the scheduling apparatus after optimization and a second parameter value in the second scheduling policy according to the information of the current production environment of the scheduling apparatus, the first scheduling action, the first scheduling policy which are used by the current scheduling, the first parameter value in the first scheduling policy, and a scheduling performance optimization model, wherein the scheduling performance optimization model is obtained by training using historical sample data of scheduling performance optimization; and blocking in a scheduling queue the workload to be scheduled, replacing the first scheduling action and the first scheduling policy which are used by the current scheduling of the scheduling apparatus, and the first parameter value in the first scheduling policy with the second scheduling action, the second scheduling policy and the second parameter value in the second scheduling policy, and relieving blocking of the scheduling queue so as to perform scheduling optimization.

In a second aspect, the present application provides a scheduling apparatus, the scheduling apparatus includes a memory and a processor, the memory is used to store a computer program; the processor is used to execute the computer program and implement the scheduling optimization method of a scheduling apparatus as described above when executing the computer program.

In a third aspect, the present application provides a computer-readable storage medium storing a computer program, wherein the computer program, when executed by a processor, makes the processor implement the scheduling optimization method of the scheduling apparatus as described above.

## BRIEF DESCRIPTION OF DRAWINGS

FIG. 1 is a flow chart of an embodiment of a scheduling optimization method of a scheduling apparatus of the present application;

FIG. 2 is a schematic structural diagram of a scheduling apparatus in an embodiment of the present application;

FIG. 3 is a schematic diagram of an application embodiment in a scheduling optimization method of a scheduling apparatus of the present application;

FIG. 4 is a schematic diagram of another application embodiment in a scheduling optimization method of a scheduling apparatus of the present application;

FIG. 5 is a schematic structural diagram of a scheduling apparatus in another embodiment of the present application;

FIG. 6 is a schematic diagram of a two-dimensional feature tensor in a scheduling optimization method of a scheduling apparatus of the present application;

FIG. 7 is a schematic diagram of another two-dimensional feature tensor in a scheduling optimization method of a scheduling apparatus of the present application;

FIG. 8 is a schematic diagram of another two-dimensional feature tensor in a scheduling optimization method of a scheduling apparatus of the present application;

FIG. 9 is a schematic diagram of a three-dimensional feature tensor in a scheduling optimization method of a scheduling apparatus of the present application;

FIG. 10 is a schematic diagram of another three-dimensional feature tensor in a scheduling optimization method of a scheduling apparatus of the present application; and

FIG. 11 is a schematic diagram of another three-dimensional feature tensor in a scheduling optimization method of a scheduling apparatus of the present application.

**DETAILED DESCRIPTION**

Technical solutions in embodiments of the application will be described clearly and thoroughly below with reference to the accompanying drawings in embodiments of the application. Obviously, the embodiments described are merely a part of the embodiments of the application rather than all of the embodiments. All other embodiments obtained by a person skilled in the art without creative work based on embodiments in the application fall within the scope of the application.

The flowcharts shown in the accompanying drawings are only examples and do not necessarily include all the contents and operations/steps, nor do they have to be performed in the order described. For example, some operations/steps may also be decomposed, combined or partially merged, thus the order actually performed may change according to actual conditions.

In the subsequent description, the suffixes such as "module", "component" or "unit" used to represent elements are only used to facilitate the description of the present application, and have no special meanings. Therefore, "module", "component" or "unit" can be used in a mixed manner.

Before introducing the embodiments of the present application in detail, the technical contents related to the present application are introduced first.

In recent years, with the rapid development of cloud-native infrastructure and technology, cloud-native gradually replaces traditional virtual machine technology due to its agility, reliability, high elasticity and easy scalability, and becomes a unified infrastructure for deploying big data application tasks within enterprises.

With scale up of the cluster, how to formulate reasonable scheduling policies for cloud-native infrastructure, make full use of cluster resources, and improve scheduling performance has become a research hotspot and difficulty in the field of cloud computing. Especially in a high-performance scheduling system that uses a plug-in architecture, a scheduling action and scheduling policy directly affect the scheduling performance in a complex production environment. Therefore, how to efficiently optimize scheduling performance is a problem that needs to be solved urgently.

Existing technical solutions usually optimize scheduling performance in a complex production environment based on manual experience, which has high labor costs and low optimization efficiency. Adaptive scheduling optimization methods in other fields cannot be directly applied to scheduling performance optimization under cloud-native architecture due to difference in application scenarios.

However, in both manual scheduling and adaptive scheduling optimization methods in other fields, the impact of change in actual production environment on scheduling performance optimization is not considered during scheduling.

In an embodiment of the present application, information of the current production environment of a scheduling apparatus is acquired; a first scheduling action and a first scheduling policy which are used by the current scheduling of the scheduling apparatus, and a first parameter value in the first scheduling policy are acquired; a second scheduling action and a second scheduling policy which are used by the scheduling apparatus after optimization and a second parameter value in the second scheduling policy are determined according to the information of the production environment, the first scheduling action, the first scheduling policy, the first parameter value in the first scheduling policy, and a scheduling performance optimization model; and the workload to be scheduled is blocked in a scheduling queue, the first scheduling action and the first scheduling policy which are used by the current scheduling of the scheduling apparatus, and the first parameter value in the first scheduling policy are replaced with the second scheduling action, the second scheduling policy and the second parameter value in the second scheduling policy, and blocking of the scheduling queue is relieved so as to perform scheduling optimization. Since the impact of the scheduling action, scheduling policy and parameter value in scheduling policy on change of the scheduling performance under complex production environments is fully considered, and the discovered rule that the production environment, scheduling action, scheduling policy, and parameter value in the scheduling policy influences change of the scheduling change and the corresponding scheduling performance optimization model are used, which can achieve adaptive scheduling optimization according to changes of actual production environment, greatly reduce the labor cost, and improve the optimization efficiency.

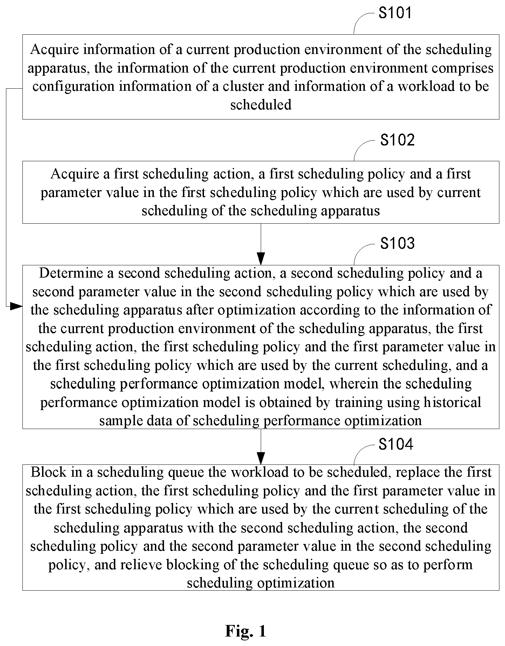

Referring to FIG. 1, FIG. 1 is a flow chart of an embodiment of a scheduling optimization method of a scheduling apparatus of the present application, and the method includes step S101, step S102, step S103 and step S104.

At step S101: information of the current production environment of the scheduling apparatus is acquired, wherein the information of the current production environment includes configuration information of a cluster and information of a workload to be scheduled;

The cluster can refer to a group of (or several) independent computers which form a large computer service system by using a high-speed communication network. Each cluster node (i.e., each computer in the cluster) is an independent server running its own service. These servers can communicate with each other, and provide applications, system resources and data to users in a collaborative way, and are managed in a single system mode. When a user requests a cluster system, the cluster gives the user the impression as a single independent server, but in fact, the user requests a group of cluster servers. In short, the cluster can be understood as a bunch of servers working together to do one same thing, and these servers may need to be managed in a unified and coordinated manner, can be distributed in one computer room or in a plurality of computer rooms in various regions across the country and the world. According to functions and structures, clusters can be classified into load-balancing clusters, high-availability clusters, high-performance-computing clusters, grid-computing clusters, etc.

The current production environment of the scheduling apparatus may refer to the production environment which the scheduling apparatus is confronted with currently, or the production environment which is scheduled by the scheduling apparatus currently, and the current production environment of the scheduling apparatus mainly includes the cluster and the workload to be scheduled.

The information of the current production environment includes configuration information of the cluster and information of the workload to be scheduled. The configuration information of the cluster may refer to configuration information related to the cluster, and may include configuration information of hardware, or may include configuration information of software system. In one embodiment, the configuration information of the cluster includes the number of nodes of the cluster and resource usage of the cluster; the configuration information of the cluster may further include the resource type, the number of resources, the resource usage, etc., of each node; and the configuration information of the cluster may further include the number of clusters, the number of nodes of each cluster, the resource usage of each node of each cluster, etc. The resource of the cluster includes, but is not limited to, CPU, GPU, memory, I/O, storage and bandwidth, etc. The information of the workload to be scheduled may refer to the information related to the workload to be scheduled. In one embodiment, the information of the workload to be scheduled includes the number of workloads to be scheduled, the type of workload to be scheduled, and the resource demand of the workload to be scheduled. The information of the workload to be scheduled may further include the number, type, resource demand and the like of the workloads to be scheduled corresponding to each node.

At step S102: a first scheduling action and a first scheduling policy which are used by the current scheduling of the scheduling apparatus, and a first parameter value in the first scheduling policy are acquired.

It should be noted that there is no obvious sequence between step S101 and step S102.

At step S103: a second scheduling action and a second scheduling policy which are used by the scheduling apparatus after optimization, and a second parameter value in the second scheduling policy are determined according to the information of the current production environment of the scheduling apparatus, the first scheduling action and the first scheduling policy which are used by the current scheduling, the first parameter value in the first scheduling policy, and a scheduling performance optimization model, wherein the scheduling performance optimization model is obtained by training using historical sample data of scheduling performance optimization.

In an embodiment of the present application, the first scheduling action, the first scheduling policy, and the first parameter value in the first scheduling policy may refer to the scheduling action, the scheduling policy, and the parameter value in the scheduling policy that are input into the scheduling performance optimization model before the second scheduling action, the second scheduling policy, and the second parameter value in the second scheduling policy; the second scheduling action, the second scheduling policy, and the second parameter value in the second scheduling policy may refer to the scheduling action, the scheduling policy, and the parameter value in the scheduling policy that are output by the scheduling performance optimization model after the first scheduling action, the first scheduling policy, and the first parameter value in the first scheduling policy.

A scheduling action may refer to a scheduling operation, step, etc., adopted by the scheduling apparatus in the scheduling process; a scheduling policy may refer to a scheduling policy, scheduling algorithm, etc., adopted by the scheduling apparatus in the scheduling process and matched with a scheduling action; and a parameter value refers to a parameter value of the scheduling policy.

At step S104: the workload to be scheduled is blocked in a scheduling queue, the first scheduling action and the first scheduling policy which are used by the current scheduling of the scheduling apparatus, and the first parameter value in the first scheduling policy are replaced with the second scheduling action, the second scheduling policy and the second parameter value in the second scheduling policy, and blocking of the scheduling queue is relieved so as to perform scheduling optimization.

In the embodiment of the present application, the information of the current production environment of the scheduling apparatus is acquired; the first scheduling action and the first scheduling policy which are used by current scheduling of the scheduling apparatus, and the first parameter value in the first scheduling policy are acquired; the second scheduling action and the second scheduling policy which are used by the scheduling apparatus and the second parameter value in the second scheduling policy are determined according to the information of the production environment, the first scheduling action, the first scheduling policy, the first parameter value in the first scheduling policy, and the scheduling performance optimization model; and the workload to be scheduled is blocked in the scheduling queue, the first scheduling action, the first scheduling policy and the first parameter value in the first scheduling policy which are used by the current scheduling of the scheduling apparatus are replaced with the second scheduling action, the second scheduling policy and the second parameter value in the second scheduling policy, and blocking of the scheduling queue is relieved so as to perform scheduling optimization. Since the impact of the scheduling action, scheduling policy and parameter value in scheduling policy on change of the scheduling performance under complex production environments is fully considered, and the discovered rule that the production environment, scheduling action, scheduling policy, and parameter value in the scheduling policy influences change of the scheduling change and the corresponding scheduling performance optimization model are used, which can achieve adaptive scheduling optimization according to changes of actual production environment, greatly reduce the labor cost, and improve the optimization efficiency.

In one embodiment, after step S104, namely, the workload to be scheduled is blocked in the scheduling queue, the first scheduling action and the first scheduling policy which are used by the current scheduling of the scheduling apparatus and the first parameter value in the first scheduling policy are replaced with the second scheduling action, the second scheduling policy and the second parameter value in the second scheduling policy, and blocking of the scheduling queue is relieved so as to perform scheduling optimization, the method further includes step S105 and step S106.

At step S105: various indicators of the cluster in the current production environment after the scheduling apparatus performs scheduling optimization are acquired, wherein the various indicators of the cluster are related to the scheduling performance of the scheduling apparatus. The various indicators of the cluster include, but are not limited to, throughput, execution time, waiting time, scheduling time, resource utilization, resource cost, etc.

At step S106: whether the scheduling performance of the scheduling apparatus after scheduling optimization meets a preset scheduling performance is determined according to the various indicators of the cluster after scheduling optimization.

In an embodiment of the present application, after the second scheduling action, the second scheduling policy, and the second parameter value in the second scheduling policy after optimization are used by the scheduling apparatus for scheduling optimization, whether the effect of using the second scheduling action, the second scheduling policy, and the second parameter value in the second scheduling policy after optimization for scheduling optimization meets the scheduling performance preset by the user is evaluated. Therefore, the various indicators of the cluster in the current production environment after the scheduling apparatus performs scheduling optimization can be acquired, and then whether the scheduling performance of the scheduling apparatus after scheduling optimization meets the preset scheduling performance is determined according to various indicators of the cluster after scheduling optimization.

If the scheduling performance of the scheduling apparatus after scheduling optimization meets the preset scheduling performance, the scheduling apparatus can continue to use the second scheduling action, the second scheduling policy and the second parameter value in the second scheduling policy for scheduling. If the scheduling performance of the scheduling apparatus after scheduling optimization does not meet the preset scheduling performance, it is necessary to continue to perform scheduling optimization again until the preset scheduling performance is met.

That is, the method may further include step S107.

At step S107: if the scheduling performance of the scheduling apparatus after scheduling optimization does not meet the preset scheduling performance, the step of acquiring information of the current production environment of the scheduling apparatus in the Step S101 is returned to, , so as to perform the scheduling optimization method of the scheduling apparatus again, until the scheduling performance of the scheduling apparatus after scheduling optimization meets the preset scheduling performance.

During scheduling optimization again, the information input into the scheduling performance optimization model includes: information of the current production environment of the scheduling apparatus, the second scheduling action, second scheduling policy and second parameter value in the second scheduling policy which are currently used by the scheduling apparatus; and output includes a third scheduling action, a third scheduling policy and a third parameter value in the third scheduling policy which used by the scheduling apparatus after optimization. If the effect after scheduling optimization (i.e., scheduling performance) after using the third scheduling action, the third scheduling policy and the third parameter value in the third scheduling policy meets the preset scheduling performance, then rescheduling optimization is stopped, and the third scheduling action, the third scheduling policy and the third parameter value in the third scheduling policy are used for scheduling; if the effect after scheduling optimization (i.e., scheduling performance) using the third scheduling action, the third scheduling policy and the third parameter value in the third scheduling policy does not meet the preset scheduling performance, then scheduling optimization is performed again, until the scheduling performance of the scheduling apparatus after scheduling optimization meets the preset scheduling performance.

In one embodiment, in the step S101, that the information of the current production environment of the scheduling apparatus is acquired may include: the information of the current production environment of the scheduling apparatus is acquired by using snapshot technology.

Snapshot technology may refer to a completely available copy of a specified data set, which includes a mapping of corresponding data at a certain time point (the time point when the copy starts); a snapshot may be a copy of representing data, or a replica of data; the primary function of a snapshot is to enable online data backup and recovery, and another function of a snapshot is to provide a storage user with another data access channel; when the original data is processed by an online application, the user can access the snapshot data and use the snapshot for test and other tasks.

In one embodiment, the configuration information of the cluster includes the number of nodes of the cluster and resource usage of the cluster, and the information of the workload to be scheduled includes the number, type and resource demand of the workload to be scheduled.

When the number of the cluster is one, in the step S101, acquiring information of the current production environment of the scheduling apparatus by using snapshot technology includes sub-step S101A1, sub-step S101A2, sub-step S101A3 and sub-step S101A4.

At sub-step S101A1: the workload to be scheduled which reaches the cluster currently in a scheduling queue and file information of the workload of the cluster are cached using the snapshot technology;

At sub-step S101A2: all workloads to be scheduled in caching are traversed, the number of the workloads to be scheduled is determined, content in the fields of type and resource demand of each workload to be scheduled is extracted from the file information of each workload to be scheduled, and the type and resource demand of each workload to be scheduled are determined.

At sub-step S101A3: a node list of the cluster is acquired by interacting with an application programming interface server of the cluster, the node list is traversed, and the number of nodes of the cluster is determined.

At sub-step S101A3: a resource list is acquired by interacting with a measurement indicator server of the cluster, resource usage of the cluster is arranged according to the resource list, and the resource usage of the cluster is cached, wherein resource of the cluster includes at least one of CPU, GPU, I/O, memory, storage or bandwidth.

When the number of the cluster is two or more, in the step S101, acquiring the information of the current production environment of the scheduling apparatus by using the snapshot technology includes sub-step S101B1, sub-step S101B2, sub-step S101B3 and sub-step S101B4.

At sub-step S101B1: workloads to be scheduled which reach the clusters currently in scheduling queue and file information of the workloads are cached according to different clusters by using the snapshot technology.

At sub-step S101B2: all workloads to be scheduled corresponding to the clusters incaching are traversed, the number of the workloads to be scheduled of each cluster is determined, content in the fields of type and resource demand of each workload to be scheduled is extracted from the file information of each workload to be scheduled, and the type and resource demand of each workload to be scheduled for each cluster is determined.

At sub-step S101B3: a node list of each cluster is acquired by interacting with an application programming interface server of each cluster, the node list is traversed, and a number of nodes of each cluster is determined.

At sub-step S101B4: a resource list is acquired by interacting with a measurement indicator server of each cluster, resource usage of each cluster is arranged according to the resource list, and the resource usage of each cluster is cached according to different clusters, wherein the resource of the cluster includes at least one of CPU, GPU, I/O, memory, storage or bandwidth.

If there is no preset scheduling performance optimization model, it is necessary to train the scheduling performance optimization model first. That is, prior to that information of a current production environment of the scheduling apparatus being acquired in the step S101, the method further includes step S111.

At step S111: the scheduling performance optimization model is obtained by training using the historical sample data of scheduling performance optimization, wherein the historical sample data of scheduling performance optimization includes a plurality of data pairs, each data pair includes the production environment before manual scheduling optimization by a user, a scheduling action before the manual scheduling optimization, a scheduling policy before the manual scheduling optimization, and a parameter value in the scheduling policy before the manual scheduling optimization, as well as a scheduling action after the manual scheduling optimization, a scheduling policy after the manual scheduling optimization, and a parameter value in the scheduling policy after the manual scheduling optimization, wherein after the scheduling apparatus performs scheduling optimization by using the scheduling action after the manual scheduling optimization, the scheduling policy after the manual scheduling optimization, and the parameter value in the scheduling policy after the manual scheduling optimization, the scheduling performance of the scheduling apparatus is higher than the scheduling performance before the scheduling optimization.

In the embodiment of the present application, the historical sample data of scheduling performance optimization used by the initial scheduling performance optimization model is the historical sample data of scheduling performance optimization of manual scheduling optimization. Each data pair includes the production environment, scheduling action and scheduling policy before the user performs the manual scheduling optimization, the parameter value in the scheduling policy before the manual scheduling optimization, the scheduling action and scheduling policy after the manual scheduling optimization, and the parameter value in the scheduling policy after manual scheduling optimization. After the scheduling apparatus uses the scheduling action, scheduling policy and the parameter value in the scheduling policy after the manual scheduling optimization to perform scheduling optimization, the scheduling performance of the scheduling apparatus is higher than the scheduling performance before scheduling optimization.

The scheduling performance optimization model in the embodiments of the present application can help improve the scheduling performance of the scheduling apparatus since the influence of scheduling action, scheduling policy and parameter value in the scheduling policy on change of scheduling performance under complex production environments is taken into full consideration.

The scheduling performance optimization model of embodiments of the present application can keep learning based on the historical sample data of scheduling performance optimization, with the accumulation of sample data, the historical sample data of scheduling performance optimization is no longer limited to the historical sample data of manual scheduling optimization, but can also include the historical sample data accumulated by subsequent automatic scheduling of the scheduling apparatus. That is, in one embodiment, the data pair further comprises a production environment before automatic scheduling optimization by the scheduling apparatus, a scheduling action before the automatic scheduling optimization and a scheduling policy before the automatic scheduling optimization, and a parameter value in the scheduling policy before automatic scheduling optimization, as well as a scheduling action after the automatic scheduling optimization, a scheduling policy after the automatic scheduling optimization, and a parameter value in the scheduling policy after the automatic scheduling optimization. Similarly, in the embodiment of the present application, after the scheduling apparatus uses the scheduling action and scheduling policy after automatic scheduling optimization, and the parameter value in the scheduling policy after automatic scheduling optimization to perform scheduling optimization, the scheduling performance of the scheduling apparatus is higher than the scheduling performance before automatic scheduling optimization.

In the embodiments of the present application, with the constant accumulation of historical sample data of scheduling performance optimization, and the continuous training of the scheduling performance optimization model based on the historical sample data of scheduling performance optimization, the scheduling performance optimization model becomes more and more accurate, so that the effect of scheduling performance optimization based on the scheduling action, scheduling policy and parameter value in the scheduling policy after optimization obtained by the scheduling performance optimization model is more ideal.

In one embodiment, a deep learning model is used as the scheduling performance optimization model uses.

Deep learning (DL) is a complex machine learning algorithm that learns inherent rules and hierarchical representations of sample data, the ultimate goal thereof is to enable a machine to have analytical learning capability like humans and to recognize data such as text, image, and sound. Deep learning is a general term for a class of pattern analysis methods, in terms of specific research content, three types of methods are involved: (1) neural network systems based on convolution operations, that is, convolutional neural networks (CNN), (2) auto-encoder neural networks based on multi-layer neurons, including auto-encoder and sparse coding which have received widespread attention in recent years, and (3) deep belief networks (DBN) that are pre-trained in the form of a multi-layer auto-encoder neural network and then further optimize the neural network weights by combining identification information.

In one embodiment, a dense convolutional network model is used as the scheduling performance optimization model.

Dense convolutional network models (DenseNet, Densely Connected Convolutional Networks) belongs to convolutional neural networks (CNN). The basic idea of a DenseNet model is consistent with that of a Residual Networks (ResNet) model, but it establishes dense connections between all preceding layers and the following layers. ResNet can train deeper CNN models to achieve higher accuracy. The core of a ResNet model is to establish "shortcuts" (skip connection) between the preceding layers and the following layers, which helps the back propagation of gradients during training, so as to train deeper CNN networks. Another major feature of DenseNet is to achieve feature reuse by connecting features on channels. These features allow DenseNet to achieve better performance than ResNet with fewer parameters and computational costs. Therefore, the DenseNet model has the following two main characteristics: 1) it alleviates the problem of gradient dissipation during training to a certain extent: during back propagation, each layer will receive gradient signals of all subsequent layers thereof, as a result, the gradient close to the input layer will not become smaller and smaller as the network depth increases; 2) since a large number of features are reused, a large number of features can be generated by using a small number of convolution kernels, and the size of the final model is relatively small.

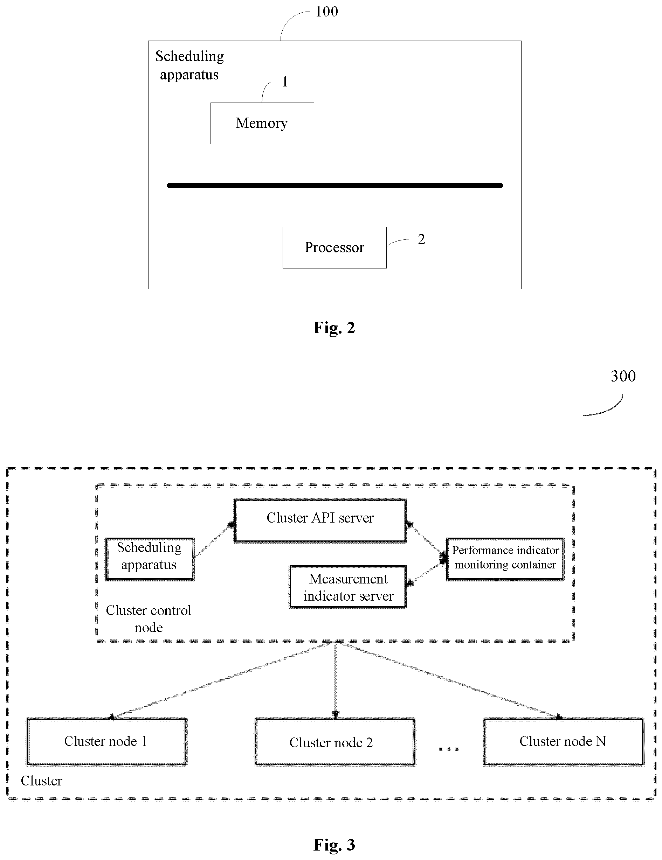

Referring to FIG. 2, FIG. 2 is a schematic structural diagram of a scheduling apparatus in an embodiment of the present application, it should be noted that the scheduling apparatus of embodiments of the present application can implement the above-mentioned scheduling optimization method of scheduling apparatus, for detailed description of relevant content, please refer to the section of the above-mentioned method, which will not be repeated here.

The scheduling apparatus 100 includes a memory 1 and a processor 2, the memory 1 is used to store a computer program; the processor 2 is used to execute the computer program and implement the scheduling optimization method of the scheduling apparatus according to any one of the above when executing the computer program.

The processor 2 may be a microcontroller unit, a central processing unit or a digital signal processor, etc. The memory 1 may be a Flash chip, a read-only memory, a disk, an optical disk, a USB disk or a mobile hard disk, etc.

The present application further provides a computer-readable storage medium storing a computer program, wherein the computer program, when executed by a processor, enables the processor to implement the scheduling optimization method of the scheduling apparatus as described above.

The computer-readable storage medium may be an internal storage unit of the above-mentioned scheduling apparatus, such as a hard disk or a memory. The computer-readable storage medium may also be an external storage device of the above-mentioned scheduling apparatus, such as an equipped plug-in hard disk, a smart memory card, a secure digital card, a flash memory card, etc.

A Kubernetes cluster is taken as an example to describe the method of embodiments of the present application in detail.

Kubernetes, or K8s for short, is open source and is used to manage containerized applications in a plurality of hosts in a cloud platform, the goal of Kubernetes is to make the deployment of containerized applications simple and efficient, Kubernetes provides a mechanism for application deployment, planning, updating, and maintenance. Each container is isolated from each other, and each container has its own file system, the processes between containers will not affect each other, and computing resources can be distinguished. Compared with virtual machines, containers can be deployed quickly, since containers are decoupled from the underlying facilities and machine file systems, they can be migrated between different clouds and different versions of operating systems.

In an embodiment of the present application, a Kubernetes cluster consists of a Kubernetes Master (a cluster control node, responsible for cluster management and control) and several Kubernetes Nodes (i.e., cluster nodes, also called workload nodes). The Kubernetes Master includes a Kubernetes API Server (i.e., an application programming interface server), a Scheduler (i.e., a scheduling apparatus), a Metrics Server (i.e., a measurement indicator server), and a performance indicator monitoring container; the Kubernetes API Server is used to collect scheduling information of Pod objects (Pod is the smallest unit in Kubernetes, which consists of a group of or one or more containers), the Scheduler is used to schedule the workload to be scheduled that reaches the cluster, the Metrics Server is used to collect the resource usage of the Node and Pod objects, and the performance indicator monitoring container is used to interact with the Kubernetes API Server and the Metrics Server to obtain indicator values. The measurement indicator server is not limited to the Metrics Server, and can be replaced by other applicable servers, such as the Prometheus Server, etc. The yaml file of the scheduling apparatus includes fields for scheduling actions and scheduling policies, as well as fields for parameter values of scheduling policies, and the yaml file of the workload to be scheduled includes fields for the type of workload to be scheduled and the amount of resource demand.

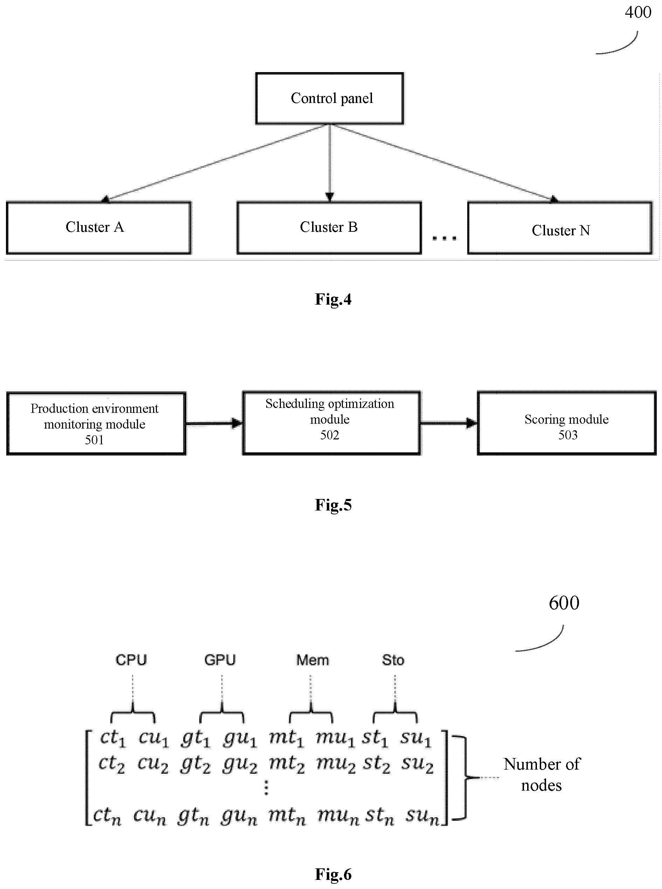

As shown in FIG. 3, FIG. 3 is a schematic diagram of an application environment that is a single-cluster scenario 300, and as shown in FIG. 4, FIG. 4 is a schematic diagram of an application environment that is a multi-cluster scenario 400.

The scheduling apparatus for adaptively scheduling optimization of scheduling performance based on Kubernetes described in an embodiment of the present application may consist of three components, as shown in FIG. 5. The scheduling apparatus includes a production environment monitoring module 501, a scheduling optimization module 502 and a scoring module 503, the scheduling apparatus in an embodiment of the present application is a specific device of the scheduling apparatus of FIG. 2 above.

The production environment monitoring module 501 is used to extract information of the current production environment by using snapshot technology, and monitor change of the production environment in real time; the scheduling optimization module 502 is used to obtain the scheduling action and scheduling policy adopted by the scheduling apparatus and the parameter value in the scheduling policy, and determine the scheduling action, scheduling policy and parameter value in the scheduling policy after optimization according to the information of the production environment, the scheduling action and scheduling policy and the parameter values in the scheduling policy, and update corresponding fields of the scheduling apparatus; and the scoring module 503 is used to score the scheduling performance of the scheduling apparatus after optimization and evaluate whether the scheduling performance meets the preset scheduling performance.

Embodiment 1: Scheduling method of a scheduling apparatus based on Kubernetes in a single-cluster scenario.

The method includes three steps, that is, information extraction of the production environment, adaptive scheduling of the scheduling apparatus, and scoring of scheduling performance. The process of the method is as follows: firstly, the production environment monitoring module 501 uses snapshot technology to extract information of the current production environment and cache the information of the production environment; secondly, the scheduling optimization module 502 obtains a first scheduling action and a first scheduling policy adopted by the scheduling apparatus and a first parameter value in the first scheduling policy, encodes information of the production environment, the first scheduling action, the first scheduling policy and the first parameter value in the first scheduling policy, inputs encoded feature tensors into the scheduling performance optimization model, and updates corresponding fields of the scheduling apparatus according to a second scheduling action, a second scheduling policy and a second parameter value in the second scheduling policy output by the scheduling performance optimization model, and the scheduling performance optimization model is trained in advance by using deep learning technology and is preset in the scheduling optimization module 502; then, the scoring module 503 calculates scores of current scheduling performance of the scheduling apparatus according to various indicator values of the cluster after optimization, the indicator values are obtained by collecting various indicator values of the cluster under the current production environment by a performance indicator monitoring container; finally, the scoring module 503 evaluates whether the scheduling performance meets the preset scheduling performance according to the scheduling performance score; if the current scheduling performance score is not lower than a threshold, the current adaptive optimization is ended; otherwise, scheduling optimization of scheduling performance of the scheduling apparatus is continued. The threshold (i.e., the preset scheduling performance) may refer to a scheduling performance score of the scheduling apparatus set by a user, which indicates the user's requirements for the scheduling performance of the scheduling apparatus.

The specific processing steps of the scheduling method of a scheduling apparatus based on Kubernetes in a single cluster scenario are as follows:

At step 1: information of the production environment of a scheduling apparatus is acquired.

The production environment monitoring module 501 uses snapshot technology to extract information of the production environment at the current moment and caches the information of the production environment so that information of the production environment can be called in subsequent steps. The information of the production environment includes the configuration information of the current cluster and the information of the workload to be scheduled, the configuration information of the current cluster includes the number of nodes of the cluster and resource (including but not limited to CPU, GPU, I/O, memory, storage and bandwidth, etc.) usage of the cluster, and the information of the workload to be scheduled includes the number, type and resource demand of the workload to be scheduled.

This step (i.e., the first step) may further include the following steps:

(1) the workload to be scheduled which reaches the cluster currently in the scheduling queue and yaml file information thereof are cached by using the snapshot technology.

(2) all workloads to be scheduled in caching are traversed, the number of the workloads to be scheduled is determined; content in the fields of type and resource demand of each workload to be scheduled is extracted from the yaml file information of each workload to be scheduled, and the type and resource demand of workload to be scheduled are determined.

(3) By interacting with a Kubernetes API Server, a node list of the cluster is obtained, the node list of the cluster is traversed, and the number of nodes in the current cluster is determined.

(4) By interacting with a Metrics Server, a resource list is obtained, the resource usage of CPU, GPU, I/O, memory, storage, bandwidth and other resources of the cluster are calculated based on the resource list, and the resource usage is cached.

At step 2: Adaptive scheduling of scheduling apparatus is performed.

The scheduling optimization module 502 extracts the information of the production environment in caching (the configuration information of the current cluster and the information of the workload to be scheduled) and the first scheduling action, the first scheduling policy and the first parameter value in the first scheduling policy adopted by the scheduling apparatus for data processing, and simultaneously inputs the processed two-dimensional feature tensors of the cluster configuration information, the information of the workload to be scheduled, the first scheduling action, the first scheduling policy and the first parameter value in the first scheduling policy into the scheduling performance optimization model, and updates the corresponding fields of the scheduling apparatus according to the second scheduling action, the second scheduling policy and the second parameter value in the second scheduling policy output by the scheduling performance optimization model, so as to realize scheduling optimization of the scheduling performance of the scheduling apparatus (that is, the scheduling apparatus uses the second scheduling action, the second scheduling policy and the second parameter value in the second scheduling policy for scheduling).

In the two-dimensional feature tensor 600 corresponding to the configuration information of the cluster, rows represent the number of nodes, and columns represent the total amount and resource utilization rate of different types of resources of each node, as shown in FIG. 6.

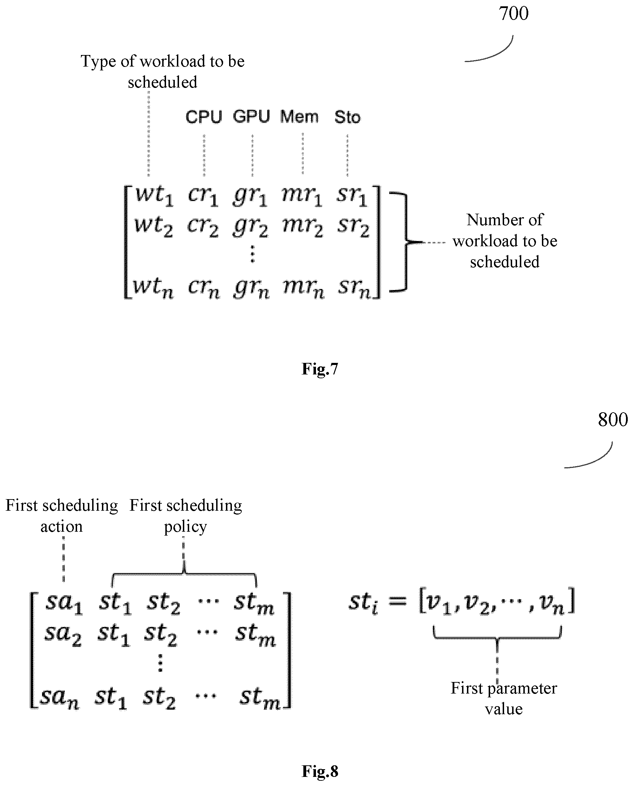

In the two-dimensional feature tensor 700 corresponding to the information of the workload to be scheduled, rows represent the number of workloads to be scheduled, the first column represents the type of different workloads to be scheduled, and the remaining columns represent the resource requirements of different workloads to be scheduled for resources such as CPU, GPU, I/O, memory (abbreviated as Mem), storage (abbreviated as Sto), and bandwidth, as shown in FIG. 7.

In the two-dimensional feature tensor 800 corresponding to the first scheduling action, the first scheduling policy, and the first parameter value in the first scheduling policy, rows represent different first scheduling actions in the scheduling apparatus, and the columns represent different first scheduling policies in the scheduling apparatus and the first parameter values in the first scheduling policy, as shown in FIG. 8. If the first scheduling action and the first scheduling policy are not currently used by the scheduling apparatus, or the first scheduling action and the first scheduling policy are not applicable, the corresponding matrix value is set to 0.

The scheduling performance optimization model is trained using deep learning technology based on historical sample data of scheduling performance optimization. Input of the scheduling performance optimization model is the production environment (configuration information of the cluster and information of the workload to be scheduled), the first scheduling action, the first scheduling policy and the first parameter value in the first scheduling policy. Output of the scheduling performance optimization model is the second scheduling action, the second scheduling policy and the second parameter value in the second scheduling policy after optimization. DenseNet network model is used as the scheduling performance optimization model. The scheduling performance optimization model can also be other applicable models.

This step (i.e., the second step) may include the following steps:

(1) The scheduling optimization module 502 extracts the information of the production environment, the configuration information such as the first scheduling action, the first scheduling policy and the first parameter value in the first scheduling policy of of the scheduling apparatus from a cache, and processes these data to construct feature tensors of the information of the production environment, the first scheduling action and the first scheduling policy and the first parameter value in the first scheduling policy.

(2) The constructed feature tensors are input into the scheduling performance optimization model, and the scheduling performance optimization model outputs the second scheduling action and the second scheduling policy and the second parameter value in the second scheduling policy after optimization.

(3) According to the second scheduling action and the second scheduling policy and the second parameter value in the second scheduling policy after optimization output by the scheduling performance optimization model, the corresponding fields in the configuration information of the scheduling apparatus are updated. The update process is as follows: firstly, the current Pod to be scheduled is blocked in the scheduling queue; then, the contents in the fields of the scheduling action, scheduling policy and the parameter value in the scheduling policy in the configuration information of the scheduling apparatus are edited, and the contents in the fields are updated to the second scheduling action, the second scheduling policy and the second parameter value in the second scheduling policy output by the scheduling performance optimization model; and finally, the scheduling apparatus is redeployed to relieve blocking of the scheduling queue.

At step 3: the scheduling performance of the scheduling device is scored.

The scoring module 503 calculates the score of the scheduling performance of the scheduling apparatus in the current production environment according to the various indicator values of the optimized cluster, and evaluates whether the scheduling performance of the scheduling apparatus meets the preset scheduling performance. The indicator values are obtained by collecting various indicator values of the cluster in the current production environment through the performance indicator monitoring container deployed in each node of the cluster.

This step (i.e. the third step) may further include the following steps:

(1) The performance indicator monitoring container deployed in each node of the cluster interacts with the Kubernetes API Server and Metrics Server deployed in the cluster to obtain various indicator values of the cluster in the current production environment. The Metrics Server is deployed in the nodes of the cluster and is used to collect the CPU, memory, storage and other resource usage of the Node and Pod objects in the cluster, the Kubernetes API Server is used to collect the scheduling information of the Pod objects in the cluster, the indicator value refers to the basic parameter value of the indicator used to calculate the scheduling performance of the scheduling apparatus.

(2) According to a calculation formula, the obtained indicator values are processed to generate various numerical values. The indicators may include throughput, Pod execution time, Pod waiting time, Pod scheduling time, resource utilization, resource cost, etc.

(3) The scoring module 503 calculates scores of scheduling performance of the scheduling apparatus in the current production environment according to the obtained values, the calculation formula may be $S = \sum_{i,j=1}^{n} w_i \cdot z_j$ . wherein, $\sum_{i=1}^{n} w_i = 1$, $0 \leq w_i \leq 1$, $w_i$ represent the weight of the set indicator, $z_j$ represents the normalized value of the indicator, and n represents the number of the indicator. The calculation formula may also be replaced by other applicable multi-indicator scoring models.

(4) Based on the calculated scheduling performance score of the scheduling apparatus, whether the scheduling performance of the scheduling apparatus meets the preset scheduling performance is evaluated; if the current scheduling performance score is not lower than the threshold, the current adaptive scheduling optimization is ended; otherwise, returning to the first step.

Embodiment 2: adaptive scheduling optimization of a scheduling apparatus based on Kubernetes in a multi-cluster scenario.

The method includes three steps, that is, information extraction of the production environment, adaptive scheduling of the scheduling apparatus, and scoring of scheduling performance. The process of the method is as follows: firstly, the production environment monitoring module 501 uses snapshot technology to extract information of the current production environment of all current clusters and cache the information of the production environment; secondly, the scheduling optimization module 502 needs to obtains first scheduling action and a first scheduling policy and a first parameter value in the first scheduling policy used by the scheduling apparatus in all clusters, encodes information of the production environment, the first scheduling action, the first scheduling policy and the first parameter value in the first scheduling policy of all clusters, inputs the encoded feature tensors into the scheduling performance optimization model, and updates corresponding fields of the scheduling apparatus in corresponding clusters according to a second scheduling action and a second scheduling policy and a second parameter value in the second scheduling policy output by the scheduling performance optimization model. In the embodiment of the present application, the input feature tensor of the information of the production environment, the input feature tensor of the first scheduling action and the first scheduling policy and the first parameter value in the first scheduling policy by, and the output feature tensor of the second scheduling action and the second scheduling policy and the second parameter value in the second scheduling policy all have one more dimension than that in the single-cluster scenario, which is used to represent the number of clusters. The scheduling performance optimization model is trained in advance using deep learning technology and is preset in the scheduling optimization module 502. Next, the scoring module 503 calculates scores of scheduling performance of the scheduling apparatus in the current production environment according to the various indicator values of the optimized individual clusters. The indicators are obtained by collecting various indicators in the current production environment of individual clusters through the performance indicator monitoring container. Finally, based on the calculated scheduling performance score of the scheduling apparatus, the scoring module 503 evaluates whether the scheduling performance of the scheduling apparatus meets the preset scheduling performance; if the current scheduling performance score of the scheduling apparatus is not lower than the threshold, the current adaptive scheduling optimization is ended; otherwise, scheduling optimization of the scheduling performance of the scheduling apparatus is continued. The threshold refers to a scheduling performance score of the scheduling apparatus set by a user, which indicates the user's requirements for the scheduling performance of the scheduling apparatus.

The specific processing steps of the scheduling method of a scheduling apparatus based on Kubernetes in a multi-cluster scenario are as follows:

At step 1: information of the production environment of a scheduling apparatus is acquired.

The production environment monitoring module 501 uses snapshot technology to extract information of the production environment of all clusters at the current moment and caches the information of the production environment of all clusters. The information of the production environment includes the configuration information of the current cluster and the information of the workload to be scheduled, the configuration information of the current cluster includes the number of nodes of the cluster and resource (including but not limited to CPU, GPU, I/O, memory, storage and bandwidth, etc.) usage of the cluster, and the information of the workload to be scheduled includes the number, type and resource demand of the workload to be scheduled.

This step (i.e., the first step) may include the following steps:

(1) The workload to be scheduled which reaches the clusters in the scheduling queue and yaml file information thereof are cached according to different clusters by using the snapshot technology.

(2) The workloads to be scheduled corresponding to the clusters in the caching is traversed and the number of workloads to be scheduled for each cluster is determined. Content in fields of type and resource demand of each workload to be scheduled are extracted from the yaml file information of each workload to be scheduled, and the type and resource demand of the workload to be scheduled of each cluster are determined.

(3) By interacting with the Kubernetes API Server of individual clusters, a node list of each cluster is obtained, the node list of the cluster is traversed, and the number of nodes in each clusters are determined.

(4) By interacting with the Metrics Server of individual clusters, a resource list is obtained, the resource usage of CPU, GPU, I/O, memory, storage, bandwidth and other resources of each cluster is calculated based on the resource list, and the resource usage is cached according to different clusters.

At step 2: Adaptive scheduling optimization of scheduling apparatus is performed.

The scheduling optimization module 502 extracts the information of the production environment of individual clusters in the cache (the configuration information of the current cluster and the information of the workload to be scheduled) and the first scheduling action, the first scheduling policy and the first parameter value in the first scheduling policy adopted by the scheduling apparatus for data processing, and simultaneously inputs the processed three-dimensional feature tensors of the cluster configuration information, the information of the workload to be scheduled, the first scheduling action, the first scheduling policy and the first parameter value in the first scheduling policy into the scheduling performance optimization model, and updates the corresponding fields of the scheduling apparatus in individual clusters according to the second scheduling action, second scheduling policy and the second parameter value in the second scheduling policy output by the scheduling performance optimization model, so that the scheduling apparatus uses the scheduling apparatus uses the second scheduling action, the second scheduling policy and the second parameter value in the second scheduling policy for scheduling, so as to realize scheduling optimization of the scheduling performance of the scheduling apparatus.

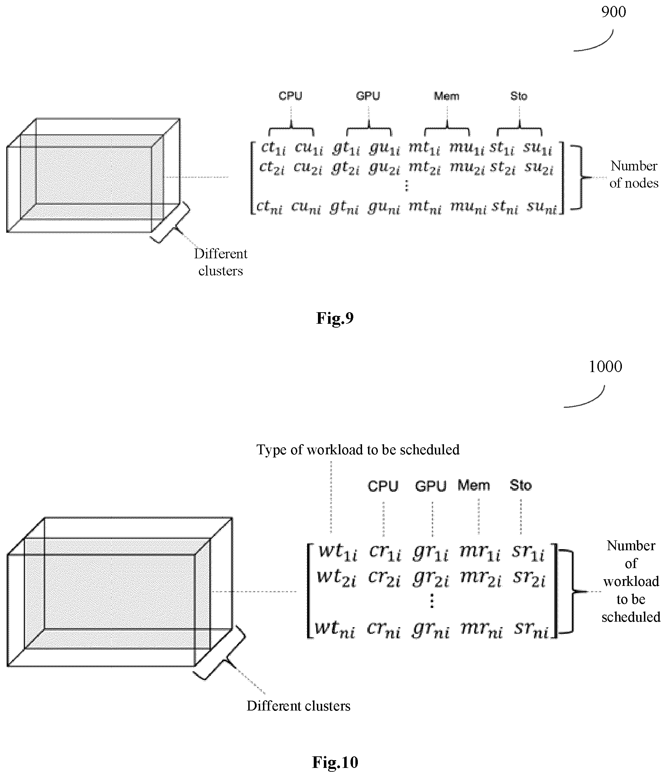

For the three-dimensional feature tensor 900 corresponding to the configuration information of the cluster, the first dimension represents the number of nodes, the second dimension represents the total amount and resource utilization of different types of resources of each node, and the third dimension represents different clusters, as shown in FIG. 9.

For the three-dimensional feature tensor 1000 corresponding to the information of the workload to be scheduled, the first dimension represents the number of workloads to be scheduled, a first column of the second dimension represents the type of different workloads to be scheduled, and the remaining columns represent the resource requirements of different workloads to be scheduled for resources such as CPU, GPU, I/O, memory, storage, and bandwidth, and the third dimension represents different clusters, as shown in FIG. 10.

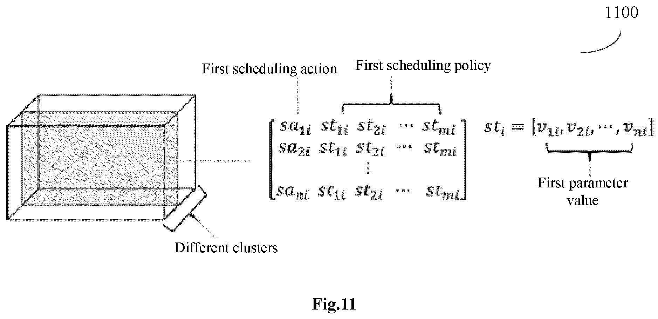

For the three-dimensional feature tensor 1100 corresponding to the first scheduling action, the first scheduling policy, and the first parameter value in the first scheduling policy, the first dimension represents different first scheduling actions in the scheduling apparatus, the second dimension represents different first scheduling policies in the scheduling apparatus and the first parameter values in the first scheduling policy, and the third dimension represents different clusters, as shown in FIG. 11.

This step (i.e., the second step) may include the following steps:

(1) The scheduling optimization module 502 extracts the information of the production environment of individual clusters in the cache and the first scheduling action and the first scheduling policy and the first parameter value in the first scheduling policy in the configuration information of the scheduling apparatus, and processes these data to construct feature tensors of the information of the production environment, the first scheduling action and the first scheduling policy and the first parameter value in the first scheduling policy.

(2) The constructed feature tensors are input into the scheduling performance optimization model, and the scheduling performance optimization model outputs the second scheduling action and the second scheduling policy and the second parameter value in the second scheduling policy.

(3) According to the second scheduling action and the second scheduling policy and the second parameter value in the second scheduling policy after optimization output by the scheduling performance optimization model, the corresponding fields in the configuration information of the scheduling apparatus in individual clusters are updated. The update process is as follows: firstly, a current Pod to be scheduled in individual clusters is blocked in the scheduling queue; then, the contents in fields of the scheduling action, scheduling policy and parameter value in the scheduling policy in the configuration information of the scheduling apparatus in individual clusters are edited, and the field contents are updated to the second scheduling action and the second scheduling policy and the second parameter value in the second scheduling policy output by the scheduling performance optimization model; and finally, the scheduling apparatus is redeployed to unblock the scheduling queue in individual clusters.

At step 3: the scheduling performance of the scheduling device is scored.

The scoring module 503 calculates the score of the scheduling performance of the scheduling apparatus in the current production environment according to the various indicator values of the optimized individual clusters, and evaluates whether the scheduling performance of the scheduling apparatus meets the preset scheduling performance. The indicator values are obtained by collecting various indicator values of the cluster in the current production environment through the performance indicator monitoring container deployed in each node of all clusters.

This step (i.e. the third step) may further include the following steps:

(1) The performance indicator monitoring container deployed in each node of all clusters interacts with the Kubernetes API Server and Metrics Server deployed in individual clusters to obtain various indicator values of individual clusters in the current production environment. The Metrics Server is deployed in the nodes of all clusters and is used to collect the CPU, memory, storage and other resource usage of the Node and Pod objects in the cluster, the Kubernetes API Server is used to collect the scheduling information of the Pod objects in the cluster, the indicator value refers to the basic parameter value of the indicator used to calculate the scheduling performance of the scheduling apparatus.

(2) According to a calculation formula, the obtained indicator values are processed to generate various numerical values. The indicators may include throughput, Pod execution time, Pod waiting time, Pod scheduling time, resource utilization, resource cost, etc.

(3) The scoring module calculates scores of scheduling performance of the scheduling apparatus in the current production environment according to the obtained values, the calculation formula is

$$S = \sum_{i,j=1}^{n} w_i \cdot z_j$$

wherein, $\sum_{i=1}^{n} w_i = 1$, $0 \leq w_i \leq 1$, $w_i$ represent the weight of the set indicator, $z_j$ represents the normalized value of the indicator, and n represents the number of the indicator. The calculation formula may also be replaced by other applicable multi-indicator scoring models.

(4) Based on the calculated scheduling performance score of the scheduling apparatus, whether the scheduling performance of the scheduling apparatus meets the preset scheduling performance is evaluated; if the current scheduling performance score is not lower than the threshold, the current adaptive scheduling optimization is ended; otherwise, returning to the first step.

In conclusion, the scheduling optimization method for a scheduling apparatus and the scheduling apparatus provided by the embodiments of the present application can be applied to scheduling performance optimization of a scheduling system, thereby reducing the costs of manual optimization and improving the optimization efficiency; and the scheduling method and apparatus can be expanded based on the Kubernetes framework, which can reduce the scheduling performance optimization costs of scheduling systems in different architectures.

It is to be understood by those skilled in the art that all or some of the steps, systems, and functional modules/units in the systems and devices in the methods disclosed above can be implemented as software, firmware, hardware, and suitable combination thereof.

In hardware implementations, the division among functional modules/units mentioned in the above description does not necessarily corresponds to the division among physical components; for example, a physical component can have a plurality of functions, or a function or step can be performed by several physical components in cooperation. Some or all of the physical components can be implemented as software to be executed by a processor, such as a central processor, digital signal processor, or microprocessor, or as hardware, or as an integrated circuit, such as an application specific integrated circuit. Such software can be distributed on computer-readable media, which can include computer storage media (or non-transitory media) and communication media (or transitory media). As is well known to those skilled in the art, the term "computer storage media" includes volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and is accessible by a computer. In addition, as is well known to those skilled in the art, communication media typically comprises computer readable instructions, data structures, program modules, or other data in a modulated data signal such as a carrier wave or other transport mechanism, and can include any information delivery media.

Embodiments of the present application are described above with reference to the accompanying drawings, which is not intended to limit the scope of the present application. Any modification, equivalent replacement, improvement, etc., that is made within the scope and principle of the present application by those skilled in the art should be included within the scope of the claims of the present application.

## Claims

1. A scheduling optimization method of a scheduling apparatus, comprising:

   acquiring information of a current production environment of the scheduling apparatus, wherein the information of the current production environment comprises configuration information of a cluster and information of a workload to be scheduled;
   acquiring a first scheduling action, a first scheduling policy and a first parameter value in the first scheduling policy which are used by current scheduling of the scheduling apparatus;
   determining a second scheduling action and a second scheduling policy which are used by the scheduling apparatus after optimization and a second parameter value in the second scheduling policy according to the information of the current production environment of the scheduling apparatus, the first scheduling action and the first scheduling policy which are used by the current scheduling, the first parameter value in the first scheduling policy, and a scheduling performance optimization model, wherein the scheduling performance optimization model is obtained by training using historical sample data of scheduling performance optimization; and
   blocking in a scheduling queue the workload to be scheduled, replacing the first scheduling action and the first scheduling policy which are used by the current scheduling of the scheduling apparatus, and the first parameter value in the first scheduling policy with the second scheduling action, the second scheduling policy and the second parameter value in the second scheduling policy, and relieving blocking of the scheduling queue so as to perform scheduling optimization.

2. The method according to claim 1, wherein after blocking in the scheduling queue the workload to be scheduled, replacing the first scheduling action and the first scheduling policy which are used by the current scheduling of the scheduling apparatus and the first parameter value in the first scheduling policy with the second scheduling action, the second scheduling policy and the second parameter value in the second scheduling policy, and relieving blocking of the scheduling queue so as to perform scheduling optimization, further comprising:

   acquiring various indicators of the cluster in the current production environment after the scheduling apparatus performs the scheduling optimization, wherein the various indicators of the cluster are related to scheduling performance of the scheduling apparatus; and
   determining, according to the various indicators of the cluster after the scheduling optimization, whether scheduling performance of the scheduling apparatus after the scheduling optimization meets a preset scheduling performance.

3. The method according to claim 2, wherein the method further comprises:
   returning, upon the condition that the scheduling performance of the scheduling apparatus after the scheduling optimization does not meet the preset scheduling performance, to the step of acquiring the information of the current production environment of the scheduling apparatus, so as to perform the scheduling optimization method of the scheduling apparatus again until the scheduling performance of the scheduling apparatus after the scheduling optimization meets the preset scheduling performance.

4. The method according to claim 1, wherein acquiring the information of the current production environment of the scheduling apparatus comprises:
   acquiring the information of the current production environment of the scheduling apparatus by using snapshot technology.

5. The method according to claim 4, wherein the configuration information of the cluster comprises a number of nodes of the cluster and resource usage of the cluster, and the information of the workload to be scheduled comprises a number of the workload to be scheduled, a type of the workload to be scheduled and a resource demand of the workload to be scheduled;
   upon the condition that the number of the cluster is one, acquiring the information of the current production environment of the scheduling apparatus by using the snapshot technology comprises:

caching a workload to be scheduled which reaches a cluster currently in a scheduling queue and file information of the workload by using the snapshot technology;

traversing all workloads to be scheduled in the caching, determining a number of the workloads to be scheduled, extracting content in fields of type and resource demand of each workload to be scheduled from the file information of each workload to be scheduled, and determining the type and resource demand of each workload to be scheduled;

acquiring a node list of the cluster by interacting with an application programming interface server of the cluster, traversing the node list, and determining a number of nodes of the cluster; and

acquiring a resource list by interacting with a measurement indicator server of the cluster, arranging resource usage of the cluster according to the resource list, and caching the resource usage of the cluster, wherein resource of the cluster comprises at least one of CPU, GPU, I/O, memory, storage or bandwidth; or

upon the condition that the number of the cluster is two or more, acquiring the information of the current production environment of the scheduling apparatus by using the snapshot technology comprises:

caching, according to different clusters, workloads to be scheduled which reach clusters currently in a scheduling queue and file information of the workloads by using the snapshot technology;

traversing all workloads to be scheduled corresponding to the clusters in the caching, determining a number of the workloads to be scheduled of each cluster, extracting content in fields of type and resource demand of each workload to be scheduled from the file information of each workload to be scheduled, and determining the type and resource demand of each workload to be scheduled for each cluster;

acquiring a node list of each cluster by interacting with an application programming interface server of each cluster, traversing the node list, and determining a number of nodes of each cluster; and

acquiring a resource list by interacting with a measurement indicator server of each cluster, arranging resource usage of each cluster according to the resource list, and caching the resource usage of each cluster according to different clusters, wherein resource of the cluster includes at least one of CPU, GPU, I/O, memory, storage or bandwidth.

6. The method according to claim 1, wherein prior to acquiring the information of the current production environment of the scheduling apparatus, further comprising:

obtaining the scheduling performance optimization model by training using the historical sample data of scheduling performance optimization, wherein the historical sample data of scheduling performance optimization comprises a plurality of data pairs, each data pair comprises a production environment before manual scheduling optimization by a user, a scheduling action before the manual scheduling optimization, a scheduling policy before the manual scheduling optimization, and a parameter value in the scheduling policy before the manual scheduling optimization, as well as a scheduling action after the manual scheduling optimization, a scheduling policy after the manual scheduling optimization, and a parameter value in the scheduling policy after the manual scheduling optimization, wherein after the scheduling apparatus performs scheduling optimization by using the scheduling action after the manual scheduling optimization, the scheduling policy after the manual scheduling optimization, and the parameter value in the scheduling policy after the manual scheduling optimization, the scheduling performance of the scheduling apparatus is higher than scheduling performance before the scheduling optimization;

the data pair further comprises a production environment before automatic scheduling optimization by the scheduling apparatus, a scheduling action before the automatic scheduling optimization and a scheduling policy before the automatic scheduling optimization, and a parameter value in the scheduling policy before automatic scheduling optimization, as well as a scheduling action after the automatic scheduling optimization, a scheduling policy after the automatic scheduling optimization, and a parameter value in the scheduling policy after the automatic scheduling optimization.

7. The method according to claim 6, wherein a deep learning model is used as the scheduling performance optimization model; or a dense convolutional network model is used as the scheduling performance optimization model.

8. The method according to any one of claims 1-7, wherein the configuration information of the cluster comprises a number of nodes of the cluster and resource usage of the cluster, and the information of the workload to be scheduled comprises a number of the workload to be scheduled, a type of the workload to be scheduled and a resource demand of the workload to be scheduled.

9. A scheduling apparatus, comprising a memory and a processor, wherein the memory is used to store a computer program; the processor is used to execute the computer program and implement the scheduling optimization method of the scheduling apparatus according to any one of claims 1 - 8 when executing the computer program.

10. A computer-readable storage medium storing a computer program, wherein the computer program, when executed by a processor, makes the processor implement the scheduling optimization method of the scheduling apparatus according to any one of claims 1 - 8.

S101

Acquire information of a current production environment of the scheduling apparatus, the information of the current production environment comprises configuration information of a cluster and information of a workload to be scheduled

S102

Acquire a first scheduling action, a first scheduling policy and a first parameter value in the first scheduling policy which are used by current scheduling of the scheduling apparatus

S103

Determine a second scheduling action, a second scheduling policy and a second parameter value in the second scheduling policy which are used by the scheduling apparatus after optimization according to the information of the current production environment of the scheduling apparatus, the first scheduling action, the first scheduling policy and the first parameter value in the first scheduling policy which are used by the current scheduling, and a scheduling performance optimization model, wherein the scheduling performance optimization model is obtained by training using historical sample data of scheduling performance optimization

S104

Block in a scheduling queue the workload to be scheduled, replace the first scheduling action, the first scheduling policy and the first parameter value in the first scheduling policy which are used by the current scheduling of the scheduling apparatus with the second scheduling action, the second scheduling policy and the second parameter value in the second scheduling policy, and relieve blocking of the scheduling queue so as to perform scheduling optimization

**Fig. 1**

100

Scheduling apparatus

1

Memory

Processor

2

**Fig. 2**

300

Cluster API server

Scheduling apparatus

Performance indicator monitoring container

Measurement indicator server

Cluster control node

Cluster node 1

Cluster node 2

. . .

Cluster node N

Cluster

**Fig. 3**

400

Fig.4

Fig.5

600

$$\begin{bmatrix} ct_1 & cu_1 & gt_1 & gu_1 & mt_1 & mu_1 & st_1 & su_1 \\ ct_2 & cu_2 & gt_2 & gu_2 & mt_2 & mu_2 & st_2 & su_2 \\ & & & & \vdots & & & \\ ct_n & cu_n & gt_n & gu_n & mt_n & mu_n & st_n & su_n \end{bmatrix}$$

CPU    GPU    Mem    Sto

Number of nodes

Fig.6

700

Type of workload to be
scheduled

CPU GPU Mem Sto

$$\begin{bmatrix} wt_1 & cr_1 & gr_1 & mr_1 & sr_1 \\ wt_2 & cr_2 & gr_2 & mr_2 & sr_2 \\ & & \vdots & & \\ wt_n & cr_n & gr_n & mr_n & sr_n \end{bmatrix}$$

Number of
workload to be
scheduled

Fig.7

800

First scheduling   First scheduling
action              policy

$$\begin{bmatrix} sa_1 & st_1 & st_2 & \cdots & st_m \\ sa_2 & st_1 & st_2 & \cdots & st_m \\ & & \vdots & & \\ sa_n & st_1 & st_2 & \cdots & st_m \end{bmatrix}$$

$$st_i = [v_1, v_2, \cdots, v_n]$$

First parameter
value

Fig.8

900

CPU GPU Mem Sto

$$
\begin{bmatrix}
ct_{1i} & cu_{1i} & gt_{1i} & gu_{1i} & mt_{1i} & mu_{1i} & st_{1i} & su_{1i} \\
ct_{2i} & cu_{2i} & gt_{2i} & gu_{2i} & mt_{2i} & mu_{2i} & st_{2i} & su_{2i} \\
& & & \vdots & & & & \\
ct_{ni} & cu_{ni} & gt_{ni} & gu_{ni} & mt_{ni} & mu_{ni} & st_{ni} & su_{ni}
\end{bmatrix}
\begin{array}{l}
\text{Number} \\
\text{of nodes}
\end{array}
$$

Different
clusters

**Fig.9**

1000

Type of workload to be scheduled

CPU GPU Mem Sto

$$
\begin{bmatrix}
wt_{1i} & cr_{1i} & gr_{1i} & mr_{1i} & sr_{1i} \\
wt_{2i} & cr_{2i} & gr_{2i} & mr_{2i} & sr_{2i} \\
& & \vdots & & \\
wt_{ni} & cr_{ni} & gr_{ni} & mr_{ni} & sr_{ni}
\end{bmatrix}
\begin{array}{l}
\text{Number} \\
\text{of} \\
\text{workload} \\
\text{to be} \\
\text{scheduled}
\end{array}
$$

Different clusters

**Fig.10**

21

First scheduling action    First scheduling policy

$$\begin{bmatrix} sa_{1i} & st_{1i} & st_{2i} & \cdots & st_{mi} \\ sa_{2i} & st_{1i} & st_{2i} & \cdots & st_{mi} \\ & & \vdots & & \\ sa_{ni} & st_{1i} & st_{2i} & \cdots & st_{mi} \end{bmatrix} \qquad st_i = [v_{1i}, v_{2i}, \cdots, v_{ni}]$$

First parameter value

Different clusters

1100

**Fig.11**

## INTERNATIONAL SEARCH REPORT

| International application No. |
| --- |
| **PCT/CN2023/111452** |

**A.    CLASSIFICATION OF SUBJECT MATTER**

G06F9/50(2006.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; EPTXT; VEN; WOTXT; USTXT; CNKI; IEEE: 集群, 任务, 调度, 负载, 策略, 动作, 参数, 重新, 更新, 再次, 循环, 性能, 优化, 阻塞, 队列, 指标, 快照, cluster, task, schedule, load, strategy, action, parameter, again, update, cycle, performance, optimization, block, queue, index, snapshot

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 115080248 A (ZTE CORP.) 20 September 2022 (2022-09-20)<br>  claims 1-10 | 1-10 |
| Y | CN 114237869 A (NATIONAL DEFENSE TECHNOLOGY INNOVATION INSTITUTE PLA ACADEMY OF MILITARY SCIENCE) 25 March 2022 (2022-03-25)<br>  description, paragraphs 54-118 | 1-4, 6-10 |
| Y | CN 113254192 A (BEIJING WODONG TIANJUN INFORMATION TECHNOLOGY CO., LTD.) 13 August 2021 (2021-08-13)<br>  description, paragraphs 49-128 | 1-4, 6-10 |
| Y | CN 112685153 A (GUANGZHOU QIDUN INFORMATION TECHNOLOGY CO., LTD.) 20 April 2021 (2021-04-20)<br>  description, paragraphs 64-141 | 1-4, 6-10 |
| A | US 2022012089 A1 (ACCENTURE GLOBAL SOLUTIONS LTD.) 13 January 2022 (2022-01-13)<br>  entire document | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 October 2023** | **29 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/111452**

| Patent document cited in search report | | | Publication date (day/month/year) | Patent family member(s) | | | Publication date (day/month/year) |
|---|---|---|---|---|---|---|---|
| CN | 115080248 | A | 20 September 2022 | CN | 115080248 | B | 10 January 2023 |
| CN | 114237869 | A | 25 March 2022 | CN | 114237869 | B | 16 September 2022 |
| CN | 113254192 | A | 13 August 2021 | None | | | |
| CN | 112685153 | A | 20 April 2021 | None | | | |
| US | 2022012089 | A1 | 13 January 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210998975